# EUROPÄISCHE PATENTSCHRIFT

(11) **EP 2 460 984 B1**
(45) Veröffentlichungstag und Bekanntmachung des Hinweises auf die Patenterteilung: **07.09.2016**
(21) Anmeldenummer: 11191587.2
(22) Anmeldetag: 01.12.2011
(51) Int. Cl.: F01M 13/04, F16K 15/14

(54) **Ölabscheidereinheit**
Oil separator unit
Unité de séparation d'huile

(30) Priorität: 02.12.2010 DE 102010062321
(43) Veröffentlichungstag der Anmeldung: 06.06.2012
(73) Patentinhaber: ElringKlinger AG, 72581 Dettingen (DE)
(72) Erfinder: Coolens, Holger, 70794 Filderstadt (DE); Herzel, Matthias, 72818 Trochtelfingen (DE); Bendl, Klaus, 75038 Oberderdingen (DE); Gorbach, Gabriele, 72766 Reutlingen (DE); Amann, Erich, 72108 Rottenburg (DE); Reichle, Gerd, 72581 Dettingen (DE); Gruhler, Tobias Michael, 72793 Pfullingen (DE)
(74) Vertreter: Hoeger, Stellrecht & Partner Patentanwälte mbB

(56) Entgegenhaltungen:
- DE-A1-102006 025 814
- DE-A1-102010 027 783
- US-A- 4 580 543
- US-A- 4 602 595
- US-A1- 2001 054 418
- US-A1- 2009 126 708

## Beschreibung

Die Erfindung betrifft eine Ölabscheidereinheit, insbesondere eine für Fahrzeugantriebe vorgesehene Ölabscheidereinheit, umfassend ein Ölabscheidergehäuse mit einem Drainagesystem und mit einer Rückschlagventileinheit, welche aus einem Ventilsitz und einem Ventilelement gebildet ist, das einen schirmähnlich ausgebildeten Ventilkörper aus einem Elastomer umfasst.

Derartige Ölabscheidereinheiten sind vorzugsweise an oder in Kurbelgehäusen an oder im Ölsumpfgehäuse an oder in Zylinderköpfen oder Nockenwellenraumabdeckungen von Verbrennungsmotoren insbesondere in Kurbelgehäuse oder Nockenwellenraumentlüftungen von Verbrennungsmotoren angeordnet. US 4,580,543 offenbart eine derartige Einheit.

Bei derartigen Ölabscheidereinheiten mit Rückschlagventil besteht das Problem, dass das Ventilelement aufgrund der auftretenden Druckpulsationen und Vibrationen im Motor und der daraus resultierenden Reibung verschleißt, wobei der Verschleiß sich dahingehend äußert, dass das Ventilelement einreißt, oder sogar dahingehend, dass sich von dem Ventilelement ein Teil ablöst.

Derartige Verschleißprobleme führen zu einer Beeinträchtigung der Funktionsfähigkeit oder dazu, dass bei der Fixierung des Ventilelements an der Rückschlagventileinheit ein hoher Herstellungsaufwand zu treiben ist.

Der Erfindung liegt daher die Aufgabe zugrunde, eine Ölabscheidereinheit der gattungsgemäßen Art derart zu verbessern, dass diese einerseits möglichst kostengünstig hergestellt werden kann und andererseits aber der Verschleiß am Ventilelement deutlich reduziert wird oder möglichst geringgradig auftritt.

Diese Aufgabe wird gelöst von einer Ölabscheidereinheit nach Anspruch 1.

Der Vorteil der erfindungsgemäßen Lösung ist darin zu sehen, dass dadurch die Möglichkeit besteht, das Einsatzteil als separates Teil herzustellen und mit seinen das Ventilelement haltenden Oberflächen derart auszubilden, dass ein Verschleiß des Ventilelements insbesondere im Bereich der dieses haltenden Oberflächen deutlich reduziert und gegebenenfalls auf ein vernachlässigbares Maß zurückgeführt werden kann.

Besonders vorteilhaft ist ferner dabei, dass dadurch, dass das Ventilelement an dem Einsatzteil gehalten ist, das Ventilelement und das Einsatzteil vormontiert werden können und somit das Einsatzteil mit dem vormontierten Ventilelement in das Ventilgehäuse eingesetzt werden kann, was ebenfalls die Handhabung des Ventilelements und die Montage desselben in dem Ventilgehäuse erheblich erleichtert.

Hinsichtlich der Ausbildung der Einsatzteilaufnahme wäre es beispielsweise denkbar, auch diese als separates Teil auszubilden, welches an dem Ventilgehäuse montierbar ist.

Das Einsatzteil kann, insbesondere wenn sich damit der Einbau vereinfacht, mehrstückig ausgebildet sein.

Eine günstige Lösung sieht jedoch vor, dass die Einsatzteilaufnahme einstückig an das Ventilgehäuse angeformt ist, so dass der Vorteil der einfachen Herstellung der Einsatzteilaufnahme einstückig mit dem Ventilgehäuse ausgenutzt werden kann, da die Verbindung zwischen der Einsatzteilaufnahme und dem Einsatzteil nicht die Probleme aufweißt, wie sie sich bei der Fixierung des aus Elastomer ausgebildeten Halteansatzes des Ventilelements ergeben.

Auch das Einsatzteil kann beispielsweise mehrstückig ausgebildet sein, beispielsweise um dessen Herstellung zu erleichtern.

Eine aus Kostengründen besonders vorteilhafte Lösung sieht jedoch vor, dass das Einsatzteil als einstückiges Teil ausgebildet ist.

Hinsichtlich der Fixierung des Einsatzteils in der Einsatzteilaufnahme sind die unterschiedlichsten Möglichkeiten denkbar.

Prinzipiell ist es denkbar, das Einsatzteil kraftschlüssig in der Einsatzteilaufnahme, beispielsweise mittels eines Gewindes, zu fixieren, wobei eine ausschließliche kraftschlüssige Fixierung hinsichtlich der Dauerbeständigkeit problematisch sein kann.

Aus diesem Grund sieht eine besonders günstige Lösung vor, dass das Einsatzteil formschlüssig in der Einsatzteilaufnahme gehalten ist.

Eine derartige formschlüssige Fixierung könnte beispielsweise über eine Bajonettverbindung erfolgen.

Eine besonders einfache Lösung sieht jedoch vor, dass das Einsatzteil in der Einsatzteilaufnahme verrastbar ist.

Eine andere vorteilhafte Möglichkeit der Fixierung des Einsatzteils in der Einsatzteilaufnahme sieht vor, dass das Einsatzteil in der Einsatzteilaufnahme stoffschlüssig fixiert ist.

Eine derartige stoffschlüssige Fixierung des Einsatzteils in der Einsatzteilaufnahme lässt sich beispielsweise durch ein Verkleben des Einsatzteils mit der Einsatzteilaufnahme realisieren.

Eine andere vorteilhafte Lösung lässt sich durch ein Verschweißen des Einsatzteils mit der Einsatzteilaufnahme realisieren.

Um sicher zu stellen, dass sich im Bereich des Einsatzteils das Öl nicht staut ist vorzugsweise vorgesehen, dass das Einsatzteil mindestens einen Durchlass für Öl aufweist.

Die Ausbildung des Ventilelements kann in unterschiedlichster Art und Weise erfolgen.

Beispielsweise kann das Ventilelement so ausgebildet sein, dass es nur den Ventilkörper umfasst.

In diesem Fall sieht eine vorteilhafte Lösung vor, dass der Ventilkörper direkt an dem Einsatzteil gehalten ist.

Eine besonders günstige Lösung sieht vor, dass der Ventilkörper fest mit dem Einsatzteil verbunden ist.

Eine andere Möglichkeit sieht vor, dass der Ventilkörper beweglich mit dem Einsatzteil verbunden ist.

Beispielsweise ist dies dadurch realisierbar, dass der Ventilkörper an dem Einsatzteil beweglich geführt ist, entweder umfangseitig oder durch einen zentralen Durchbruch.

Eine besonders günstige Lösung führt bei einer beweglichen Verbindung zwischen dem Ventilkörper und dem Einsatzteil sieht vor, dass der Ventilkörper mit einem Halteansatz des Ventilelements versehen ist.

Vorzugsweise ist dabei der Halteansatz einstückig an den Ventilkörper angeformt.

Dabei kann der Halteansatz radial außen liegend angeordnet sein oder als zentraler Ansatz mit dem Ventilkörper verbunden sein.

Prinzipiell wäre es bei der erfindungsgemäßen Lösung aufgrund der elastischen Ausführung des Ventilkörpers möglich, das Öffnen und Schließen der Rückschlagventileinheit durch eine elastische Deformation zu realisieren, so dass aufgrund seiner elastischen Deformation der Ventilkörper vom Ventilsitz abhebt oder an dem Ventilsitz aufliegt.

Dies hätte jedoch zu Folge, dass das Rückschlagventil nur dann öffnet, wenn das über dem Rückschlagventil stehende Öl aufgrund einer relativ großen Ölsäule einen ausreichenden hydrostatischen Druck ausübt.

Aus diesem Grund ist vorzugsweise vorgesehen, dass der Ventilkörper insgesamt relativ zum Ventilsitz zwischen einer Schließstellung und einer Öffnungsstellung bewegbar ist.

Das heißt, dass sich der gesamte Ventilkörper relativ zum Ventilsitz bewegen kann, um von der Schließstellung in die Öffnungsstellung oder umgekehrt oder überzugehen.

In diesem Fall ist eine elastische Deformation des Ventilkörpers lediglich dazu notwendig, um einen dichten Abschluss des Ventilkörpers mit dem Ventilsitz in der Schließstellung erreichen zu können.

Vorzugsweise lässt sich eine derartige Bewegbarkeit des Ventilkörpers zwischen der Schließstellung und der Öffnungsstellung dadurch erreichen, dass der Ventilkörper geführt zwischen der Schließstellung und der Öffnungsstellung bewegbar ist, um Fehlfunktionen des Rückschlagventils, insbesondere ein unzuverlässiges Schließen desselben, zu vermeiden.

Derartige Fehlfunktionen des Rückschlagventils kommt insbesondere dann zustande, wenn der Ventilkörper bei seiner Bewegung zwischen der Schließstellung und der Öffnungsstellung oder umgekehrt verkantet und sich somit nicht mehr in der gewünschten Weise bewegen kann.

Aus diesem Grund sieht eine vorteilhafte Lösung vor, dass der Ventilkörper im Wesentlichen verkantungsfrei zwischen der Schließstellung und der Öffnungsstellung geführt ist, so dass eine zuverlässige Funktion des Ventilkörpers sichergestellt werden kann.

Eine derartige verkantungsfreie Führung des Ventilkörpers zwischen der Öffnungsstellung und der Schließstellung ist in unterschiedlichster Art und Weise realisierbar.

Besonders vorteilhaft lässt sich eine derartige verkantungsfreie Führung des Ventilkörpers dann erreichen, wenn diese verkantungsfreie Führung durch eine Führung innerhalb des Einsatzteils, das heißt bei einem zweiteilig ausgeführten Einsatzteil erfolgt oder durch eine Relativbewegung des Einsatzteils in der Einsatzteilaufnahme, so dass zwischen dem Einsatzteil und der Aufnahme die Führung für die Bewegbarkeit des Ventilkörpers erfolgt.

Ein anderes vorteilhaftes Ausführungsbeispiel sieht vor, dass der Halteansatz des Ventilkörpers in dem Einsatzteil bewegbar geführt ist und dadurch eine Führung des Ventilelements und insbesondere des Ventilkörpers realisierbar ist.

Hinsichtlich der Aufnahme des Ventilelements durch das Einsatzteil wurden bislang keine näheren Angaben gemacht.

So lässt sich die Verschleißreduzierung des Ventilelements insbesondere dadurch realisieren, dass das Einsatzteil das Ventilelement mit gratfreien Flächen aufnimmt.

Besonders günstig ist es ferner, wenn das Einsatzteil das Ventilelement mit bearbeiteten Flächen aufnimmt, wobei unter bearbeitete Flächen zu verstehen ist, dass diese eine auf das Elastomermaterial des Ventilelements verschleißfrei wirkende Oberflächenrauhigkeit aufweisen.

Ferner ist vorzugsweise vorgesehen, dass das Einsatzteil mit mit Radien > 0,2 Millimeter ineinander übergehenden Flächen an dem Ventilelement anliegt.

Besonders vorteilhaft lassen sich die an dem Ventilelement anliegenden Flächen dann realisieren, wenn das Einsatzteil aus einem von Verstärkungsfasern freien Kunststoffmaterial ausgebildet ist.

Zweckmäßigerweise lässt sich das Einsatzteil aus dem Kunststoffmaterial realisieren, welches das Matrixmaterial des Ventilgehäuses darstellt.

Eine besonders günstige Lösung sieht vor, dass das Einsatzteil einen Ringkörper zur Aufnahme des Ventilelements aufweist, da ein derartiger Ringkörper in der Lage ist, das Ventilelement besonders verschleißarm und schonend aufzunehmen.

Ferner ist es vorteilhaft, wenn der Ringkörper eine gerundete Ringinnenseite aufweist, mit welcher dieser an dem Ventilelement anliegt.

Alternativ dazu sieht eine vorteilhafte Lösung vor, dass das Einsatzteil eine Haltehülse aufweist.

Zweckmäßigerweise ist bei einer derartigen Haltehülse vorgesehen, dass diese mit einem gerundeten Stützwulst an dem Ventilelement anliegt.

Hinsichtlich der Ausbildung der Einsatzteilaufnahme zum Aufnehmen des Einsatzteils sind die unterschiedlichsten Lösungen denkbar.

Eine vorteilhafte Lösung sieht vor, dass die Einsatzteilaufnahme das Einsatzteil zumindest teilweise aufnimmt.

Bei dieser Lösung ist beispielsweise vorgesehen, dass das Ventilelement außerhalb der Einsatzteilaufnahme angeordnet ist.

Eine andere vorteilhafte Lösung sieht vor, dass die Einsatzteilaufnahme das Einsatzteil vollständig aufnimmt.

Unabhängig davon, ob die Einsatzteilaufnahme das Einsatzteil teilweise oder vollständig aufnimmt, kann die Anordnung des Ventilelements beliebig erfolgen.

Insbesondere besteht auch dann, wenn die Einsatzteilaufnahme das Einsatzteil vollständig aufnimmt, die Möglichkeit, das Ventilelement außerhalb der Einsatzteilaufnahme anzuordnen.

Eine besonders günstige Lösung sieht jedoch vor, dass die Einsatzteilaufnahme das Ventilelement aufnimmt.

Eine derartige Lösung hat den Vorteil, dass dadurch das Ventilelement durch die Einsatzteilaufnahme auch bei partiellem Verschleiß oder Ablösung von Teilen noch zusätzlich gesichert werden kann.

Besonders vorteilhaft ist dabei eine Lösung, bei welcher das Ventilelement in einem zwischen dem Einsatzteil und der Einsatzteilaufnahme gebildeten Raum angeordnet ist.

In diesem Fall besteht die Möglichkeit, dass Ventilelement insbesondere den Ventilkörper desselben selbst dann festzuhalten, wenn durch Verschleiß des Ventilelements sich dieses vom Halteansatz ablösen würde, da dass Ventilelement nach wie vor in dem zwischen dem Einsatzteil und der Einsatzteilaufnahme gebildeten Raum gehalten werden kann.

Hinsichtlich der Ausbildung des Ventilsitzes wurden bislang keine näheren Angaben gemacht.

So wäre es beispielsweise denkbar, auch für die Ausbildung des Ventilsitzes ein separates Element vorzusehen, welches am Ventilgehäuse fixierbar ist.

Besonders kostengünstig ist jedoch eine Lösung, bei welcher der Ventilsitz an dem Ventilgehäuse ausgebildet ist.

Eine ebenfalls vorteilhafte und kostengünstige Lösung sieht vor, dass der Ventilsitz an dem Einsatzteil ausgebildet ist.

In diesem Fall besteht ebenfalls die Möglichkeit, den Ventilsitz mit einer Oberflächenqualität herzustellen, die das Ventilelement, insbesondere den Ventilkörper, verschleißfrei an den Ventilsitz anliegen lässt.

Insbesondere besteht die Möglichkeit, den Ventilsitz gratfrei und mit einer bevorzugten Oberflächenqualität entweder durch Bearbeiten oder durch andere Maßnahmen herzustellen.

Dabei erweist es sich insbesondere als Vorteil, wenn das Einsatzteil aus einem von Verstärkungsfasern freien Kunststoffmaterial hergestellt ist, da sich ein derartiges Material leicht bearbeiten und somit mit einer hohen Oberflächenqualität herstellen lässt.

Um dem Ventilgehäuse und auch insbesondere dem Ölabscheidergehäuse die notwendige Stabilität und Dauerfestigkeit zu verleihen ist vorzugsweise vorgesehen, dass das Ölabscheidergehäuse und/oder das Ventilgehäuse aus einem faserverstärktem Kunststoffmaterial ausgebildet ist, da dieses die mechanische Festigkeit und die Temperaturbeständigkeit erhöht.

Ein derartiges faserverstärktes Kunststoffmaterial lässt sich nicht mit hoher Oberflächenqualität bearbeiten. Dies ist jedoch im Falle der Verwendung eines Einsatzteils irrelevant, da die Oberflächenqualität bei der Wechselwirkung zwischen dem Einsatzteil und der Einsatzteilaufnahme unkritisch ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Gesamtdarstellung einer Ölabscheidereinheit als Teil eines Fahrzeugmotors;
- Fig. 2: einen Schnitt durch ein erstes Ausführungsbeispiel eines Drainagesystems mit Rückschlagventileinheit;
- Fig. 3: einen Schnitt ähnlich Fig. 2 durch ein zweites Ausführungsbeispiel einer Ölabscheidereinheit mit Rückschlagventileinheit;
- Fig. 4: einen Schnitt ähnlich Figur 2 durch ein drittes Ausführungsbeispiel einer Ölabscheidereinheit mit Rückschlagventileinheit;
- Fig. 5: einen Schnitt ähnlich Fig. 2 eines vierten Ausführungsbeispiels einer erfindungsgemäßen Ölabscheidereinheit mit Rückschlagventileinheit;
- Fig. 6: einen Schnitt ähnlich Fig. 2 durch ein fünftes Ausführungsbeispiel einer erfindungsgemäßen Ölabscheidereinheit mit Rückschlagventileinheit;
- Fig. 7: einen Schnitt ähnlich Fig. 2 durch ein sechstes Ausführungsbeispiel einer erfindungsgemäßen Ölabscheidereinheit mit Rückschlagventileinheit und
- Fig. 8: einen Schnitt ähnlich Fig. 2 durch ein siebtes Ausführungsbeispiel einer erfindungsgemäßen Ölabscheidereinheit mit Rückschlagventileinheit.

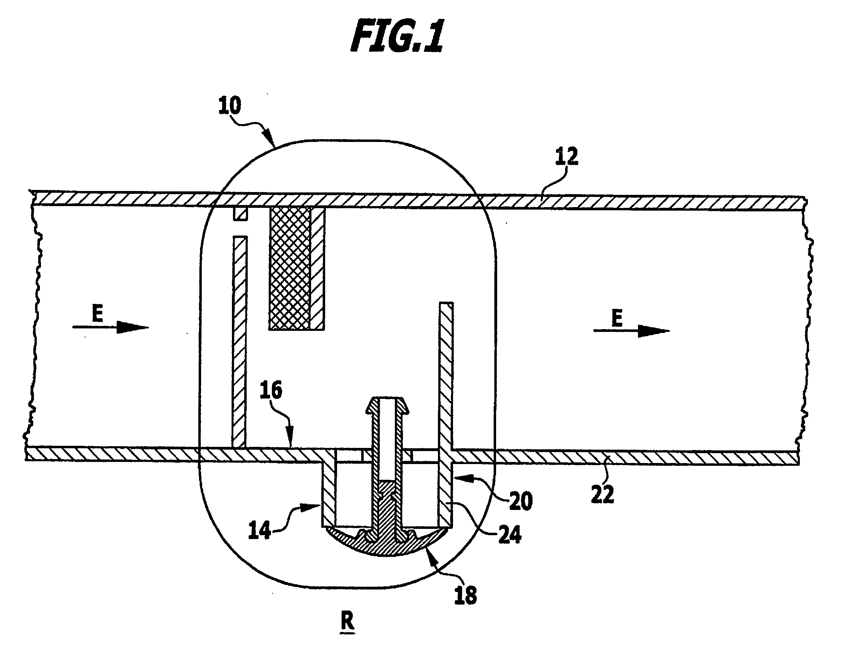

Eine in Figur 1 dargestellte und als Ganzes mit 10 bezeichnete Ölabscheidereinheit, beispielsweise integriert in ein Kurbelgehäuseteil oder eine Nockenwellenraumabdeckung eines Verbrennungsmotors, umfasst ein von einem Entlüftungsgas E durchströmtes Ölabscheidergehäuse 12, welches mit einem Drainagesystem 14 versehen ist, das eine Ölsammelvorrichtung 16 und eine dieser zugeordnete Rückschlagventileinheit 18 mit einem Ventilgehäuse 20 umfasst, welche dazu dient, aus der Ölsammelvorrichtung 16 Öl, in einem Raum R beispielsweise in ein Kurbelgehäuse oder einen Nockenwellenraum, abzuführen, jedoch ein Rückströmen von Öl oder Gas aus dem Raum R in die Ölsammelvorrichtung 16 zu verhindern.

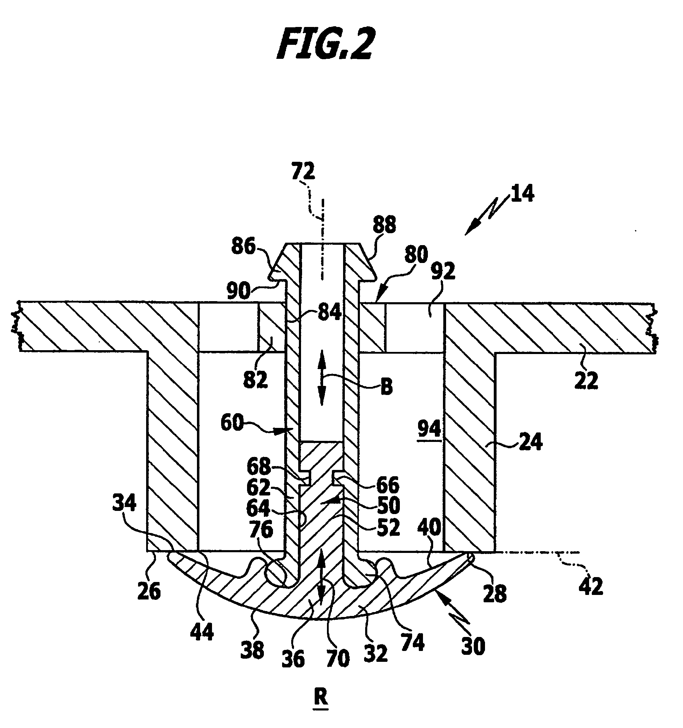

Ein erstes Ausführungsbeispiel eines derartigen erfindungsgemäßen Drainagesystems 14, dargestellt in Figur 2, umfasst einen an einen Boden 22 der Ölsammelvorrichtung 16 angeformten Ventilträger 24, welcher beispielsweise als sich an den Boden 22 anschließende Hülse ausgebildet ist, die auf ihrer dem Boden 22 abgewandten Stirnseite 26 einen Ventilsitz 28 ausbildet, an welchen ein als Ganzes mit 30 bezeichnetes Ventilelement mit einem schirmartig ausgebildeten Ventilkörper 32 mit einem äußeren Schirmrand 34 anlegbar ist.

Der Ventilkörper 32 dient dabei dazu, einen vom Ventilsitz 28 umgebenen Durchlass 44 im Boden 22 zu verschließen, wobei der Ventilsitz 28 auf einer dem Ventilkörper 32 zugewandten Seite um den Durchlass 44 herum verlaufend am Ventilsitzträger 24 und somit am Boden 22 angeordnet ist. Der schirmartige Ventilkörper 32 erstreckt sich dabei von einem Zentralbereich 36 gewölbt bis zu dem äußeren Schirmrand 34, wobei der Ventilkörper 32 eine konvex gewölbte und dem Ventilsitz 28 abgewandt liegende Außenseite 38 sowie eine konkav gewölbte Innenseite 40 aufweist.

In einer Schließstellung der Rückschlagventileinheit 18 liegt der Schirmrand 34 an dem Ventilsitz 28 an und erstreckt sich dabei in einer Ebene 42, in welcher auch der Ventilsitz 28 liegt, wobei zum kraftbeaufschlagten Anlegen des Schirmrands 34 an dem Ventilsitz 28 der Ventilkörper 32 zwischen dem Zentralbereich 36 und dem Schirmrand 34 elastisch vorgespannt sein kann.

An den Zentralbereich 36 des Ventilkörpers 32 ist ein Halteansatz 50 an diesen einstückig angeformt, welcher sich über die konkav gewölbte Innenseite 40 und über den Schirmrand 34 erhebt und mit einem Haltezapfen 52 in ein Einsatzteil 60 eingreift, welches beispielsweise eine Haltehülse 62 aufweist, in deren Innenraum 64 sich der Haltezapfen 52 hineinerstreckt und in diesem formschlüssig fixiert ist, beispielsweise durch einen in den Innenraum 64 hineinragenden Kragen 66 der Haltehülse 62, welcher in eine entsprechende Vertiefung 68 im Haltezapfen 52 eingreift, so dass der Haltezapfen 52 in Richtung seiner Längserstreckung 70 formschlüssig in der Haltehülse 62 fixiert ist, wobei die Längsrichtung 72 der Haltehülse parallel zur Längsrichtung 70 verläuft.

Die Haltehülse 62 ist ferner an ihrem dem Zentralbereich 36 zugewandten Ende mit einem umlaufenden Stützwulst 74 mit gerundetem gratfrei bearbeiteten Oberflächen versehen, an welchen der Zentralbereich 36 mit einer entsprechenden Vertiefung 76 anliegt und diese zumindest teilweise umschließt.

Das gesamte Ventilelement 30, also der Ventilkörper 32 und der Halteansatz 50, sind aus einem Elastomermaterial ausgebildet, welches durch die Haltehülse 62 des Einsatzteils 60 und den Stützwulst 74 in der Lage ist, die Deformationsbewegungen zum Öffnen der Rückschlagventileinheit 18, also die Deformationsbewegungen bei welchen sich der Schirmrand 34 von dem Ventilsitz 28 abhebt, dauerhaft und frei von scharfkantigen Einwirkungen seitens des Stützwulstes und somit langzeitstabil durchzuführen.

Die Fixierung des Einsatzteils 60 der Rückschlagventileinheit 18 erfolgt durch eine als Ganzes mit 80 bezeichnete Einsatzeilaufnahme, welche ein Einsatzteilträgerelement 82 mit einem Durchbruch 84 aufweist, durch welchen die Haltehülse 62 des Einsatzteils 60 hindurchsteckbar ist, so dass an die Haltehülse 62 angeformte Rastnasen 86 des Einsatzteils auf einer dem Ventilelement 30 gegenüberliegenden Seite das Einsatzteilträgerelement hintergreifen und somit das Einsatzteil 60 gegen ein Lösen vom Einatzteilträgerelement 82 sichern.

Vorzugsweise ist dabei die Haltehülse 62 mit ihrem die Rastnasen 86 tragenden Endbereich radial nach innen deformierbar, so dass die Rastnasen 86 mit Einschubschrägen 88 beim Einsetzen des Einsatzteils 60 in das Einsatzteilträgeelement 82 an dem Durchbruch 84 anliegen, welche dann aufgrund der Wirkung der Einschubschrägen 88 die Rastnasen 86 radial nach innen drücken, so dass diese durch den Durchbruch 84 hindurch bewegbar sind und mit ihren Halteflächen 90 an dem Einsatzteilträgerelement 82 um den Durchbruch 84 herum anliegen und abgestützt sind.

Zur Bewegung des Ventilelements 30 zwischen der in Fig. 2 dargestellten Schließstellung und einer Öffnungsstellung ist das Einsatzteil 60 relativ zu der Einsatzteilaufnahme 80 geführt bewegbar, beispielsweise dadurch, dass die Haltehülse 62 in ihrer Längsrichtung relativ zu Einsatzteilträgerelement 82 so weit in der Bewegungsrichtung B bewegbar ist, dass die Haltefläche 90 erst dann an dem Einsatzteilträgerelement 82 anliegen, wenn das Einsatzteil 60 mit dem Ventilelement 30 so weit in Richtung des Ventilsitzes 28 bewegt wurde, dass der Schirmrand 32 bei undeformiertem Ventilkörper 32 im Abstand von dem Ventilsitz 28 steht und somit die Rückschlagventileinheit 18 in der Öffnungsstellung steht.

Vorzugsweise umfasst das Einsatzteilträgerelement 82 noch Durchlassöffnungen 92, durch welche über dem Boden 22 sich sammelndes Öl durch das Einsatzteilträgerelement 82 hindurch in den Ventilsitzträger 24 eintreten und in Richtung des Ventilkörpers 32 fließen kann, der bei einer ausreichend großen Ölmenge somit einen ausreichend großen statischen Druck erzeugt, welcher zum Beispiel bei laufendem Motor einer Druckdifferenz zwischen dem Druck im Raum R und dem Druck in dem Ventilsitzträger entgegenwirkt, die das Ventilelement 30 in der Schließstellung hält, so dass der Ventilkörper 32 mit dem Schirmrand 34 vom Ventilsitz 28 abhebt und in die Öffnungsstellung übergeht, um das Öl aus einem Innenraum 94 des Ventilsitzträgers 24 der Schwerkraftrichtung folgend in einen den Ventilkörper 32 auf seiner konvexen Außenseite 38 umgebenden Raum R austreten zu lassen, wobei der Raum R beispielsweise ein Raum des Kurbelgehäuses oder ein Nockenwellenraum sein kann.

Insbesondere sind bei dem ersten Ausführungsbeispiel der Boden 22, der an diesen einstückig angeformten Ventilsitzträger 24 und die Einsatzteilaufnahme 80 einstückig aus einem Kunststoffmaterial gebildet, welches zur Erhöhung der Stabilität mit Fasern gefüllt ist.

Bei einem derartigen Kunststoffmaterial ist es problematisch, das Ventilelement 30, das aus Elastomermaterial hergestellt ist, in einer gratfreien Aufnahme aufzunehmen, so dass das Ventilelement 30 dauerhaft beschädigungsfrei funktionieren kann.

Aus diesem Grund ist das Einsatzteil 60 vorgesehen, welches vorzugsweise aus einem Kunststoffmaterial ohne Faserfüllung hergestellt wird, wobei das Matrixmaterial beispielsweise dasselbe Material wie das Matrixmaterial des Bodens 22 der Ölsammelvorrichtung 16 und auch des Ventilsitzträgers 24 sowie der Einsatzteilaufnahme 80 sein kann.

Das Einsatzteil 60 kann dabei separat von der Ölsammelvorrichtung 16 als Zusatzteil hergestellt werden und mit Oberflächen zur Aufnahme des Halteansatzes 50 versehen sein, welche eine für das verschleißfreie Aufnehmen von Elastomermaterial notwendige Oberflächenform und eine hohe Oberflächenqualität aufweisen, so dass der Halteansatz 50 und somit auch das Ventilelement 30 keinerlei oberflächenbedingte Beschädigungen im Verlauf Ihrer Funktion durch das Einsatzteil 60 erfahren.

Dagegen ist das Einsatzteil 60 hinsichtlich seiner Fixierung in der Einsatzteilaufnahme 80 unempfindlich, so dass die Einsatzteilaufnahme 80 die im Zusammenhang mit fasergefülltem Kunststoffmaterial auftretenden Oberflächenprobleme aufweisen kann, die sich nicht negativ auf die Verbindung zwischen der Einsatzteilaufnahme 80 und dem Einsatzteil 60 auswirken.

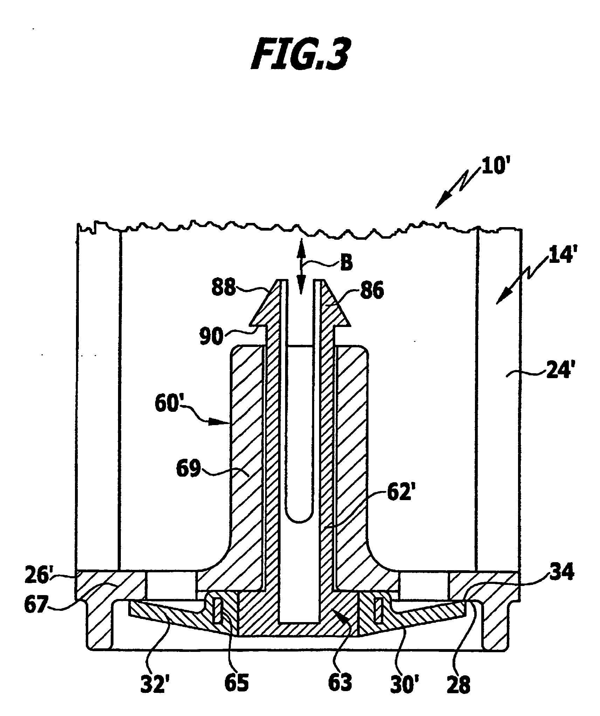

Bei einem zweiten Ausführungsbeispiel einer Ölabscheidereinheit 10' mit einem Drainagesystem 14', dargestellt in Figur 3, ist das Einsatzteil 60' zweigeteilt ausgeführt, nämlich einerseits als Haltehülse 62', welche einen Basiskörper 63 für das Ventilelement 30' bildet, das an den Basiskörper 63 angeformt, beispielsweise angespritzt ist, und dabei im Basiskörper 63 vorgesehene Durchbrüche 65 durchsetzt, so dass der Ventilkörper 32' des Ventilelements mechanisch fest mit dem Basiskörper 63 verbunden ist und im Übrigen mit diesem auch mediendicht abschließt.

Im Übrigen erstreckt sich der Ventilkörper 32' ebenfalls schirmähnlich bis zum Schirmrand 34, welcher an dem Ventilsitz 28 in der Schließstellung anlegbar ist.

Im Gegensatz zum ersten Ausführungsbeispiel ist der Ventilsitz 28 an einem Flanschkörper 67 des Einsatzteils 60 angeordnet, welcher seinerseits mit einer Führungshülse 69 für die Halthülse 62' fest verbunden ist, so dass die Haltehülse 62' in der Führungshülse 69 in einer Bewegungsrichtung B begrenzt bewegbar ist, um den Ventilkörper 32' von der in Figur 3 dargestellten Schließstellung in die Öffnungsstellung zu bewegen, die durch an der Führungshülse 69 in der Öffnungsstellung anliegende Haltflächen 90 der Rastnasen 86 festgelegt ist.

Die Führungshülse 69 bildet dabei für die Halthülse 62' eine verkantungsfreie Längsführung in der Bewegungsrichtung B, durch die der Ventilkörper 32' sicher und störungsfrei zwischen der Schließstellung und der Öffnungsstellung bewegbar ist.

Vorzugsweise ist der Flanschkörper 67 an der Stirnseite 26' des Ventilsitzträgers 24' angelegt und schließt dicht mit dieser ab, was beispielsweise entweder durch eine stoffschlüssige Verbindung realisierbar ist.

Auch bei dem zweiten Ausführungsbeispiel ist der Vorteil darin zu sehen, dass das Einsatzteil 60' umfassend die Haltehülse 62' den Flanschkörper 67 mit dem Führungskörper 69 ein separat herzustellendes und an dem Ventilgehäuse 20 zu fixierendes Bauteil ist, bei welchem die Verbindung des Ventilkörpers 32' mit dem Basiskörper 63 der Haltehülse 62' verschleißfrei ausgebildet werden kann und im Übrigen eine Bewegbarkeit der Haltehülse 62' relativ zur Führungshülse 69 verschließfrei sichergestellt werden kann, so dass die Lebensdauer des aus dem Elastomermaterial hergestellten Ventilkörpers 32' nicht durch Oberflächendefekte des Materials des Ventilgehäuses 20 limitiert ist.

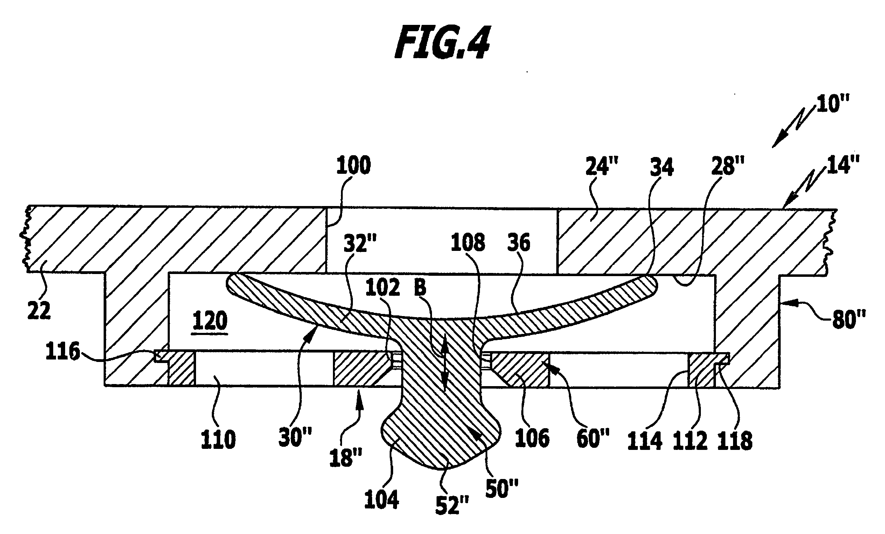

Bei einem dritten Ausführungsbeispiel einer Ölabscheidereinheit 10" mit einem Drainagesystems 14", dargestellt in Figur 4, ist an den Boden 22 ebenfalls der Ventilsitzträger 24" angeformt, welcher auf einer Seite den Ventilsitz 28' bildet, der dem Ventilelement 30" zugewandt angeordnet ist.

Das Ventilelement 30" umfasst ebenfalls einen schirmähnlich ausgebildeten Ventilkörper 32", welcher mit seinem Schirmrand 34 an dem Ventilsitz 28" im geschlossenen Zustand der Rückschlagventileinheit 18" anliegt.

An den Zentralbereich 36 des Ventilkörpers 32" ist, und zwar in diesem Fall auf einer dem Ventilsitz 28" abgewandten Seite, der Halteansatz 50" angeformt, welcher eine sich an den Ventilkörper 32" anschließende Einschnürung 102 und eine auf die Einschnürung 102 folgende und dem Ventilkörper 32" gegenüberliegende Verdickung 104 aufweist, die gemeinsam den Haltezapfen 52" bilden.

Auch bei diesem Ausführungsbeispiel sind der Haltezapfen 52" sowie der Ventilkörper 32" einstückig miteinander verbunden und aus einem Elastomer-material hergestellt.

Die Fixierung des Ventilelements 30" erfolgt durch ein Einsatzteil 60", das auf einer dem Ventilsitz 28" gegenüberliegenden Seite des Ventilkörpers 32" angeordnet ist und mit einem Ringkörper 106, der in die Einschnürung 102 eingreift, das Ventilelement 30 fixiert hält, wobei der Ringkörper 106 mit einer gerundeten und die erforderliche Oberflächenqualität aufweisenden Ringinnenseite 108 im Bereich der Einschnürung 102 am Haltezapfen 52" anliegt und somit diesen vor einer Montage des Einsatzteils 60" in der Bewegungsrichtung B begrenzt bewegbar hält.

Der Ringkörper 106 des Einsatzteils 60" ist über Arme 110 mit einem äußeren Haltering 112 verbunden, so dass zwischen den Armen 110 Durchlässe 114 entstehen, durch welche Öl durch das Einsatzteil 60" hindurchtreten kann.

Das Einsatzteil 60" weist an dem äußeren Haltering 112 Vorsprünge 116 auf, die in Vertiefungen 118 der Einsatzteilaufnahme 80" eingreifen, wobei in diesem Fall die Einsatzteilaufnahme 80" einstückig an den Boden 22 angeformt ist und als sich über dem Ventilsitz 28" erhebende Hülse ausgebildet ist, in deren Innenraum 120 der Ventilkörper 32" und das Einsatzteil 60" angeordnet werden können, wobei der Ventilkörper 32" bei diesem Ausführungsbeispiel zwischen dem Ventilsitz 28" und dem Einsatzteil 60" liegt.

Die Bewegbarkeit des Ventilkörpers 32" zwischen der Schließstellung, dargestellt in Fig. 4 und der Öffnungsstellung in der Bewegungsrichtung B wird vorgegeben durch den Abstand des Einsatzteils 60" von dem Ventilsitz 28", der so gewählt ist, dass der Ventilkörper von der Schließstellung, in welcher der Schirmrand 34 am Ventilsitz 28 anliegt, in die Öffnungsstellung bringbar ist, in welcher der Ventilkörper 32" mit der Außenseite 38 an dem Einsatzteil 60" anliegt.

Somit ist der Ventilkörper 32" durch das Einsatzteil 60" zusätzlich gegen ein Ablösen vom Halteansatz 50" gesichert, so dass selbst im Fall eines Ablösens vom Halteansatz 50" der Ventilkörper 32" nicht die Möglichkeit hat, sich durch die Durchlässe 114 hindurchzubewegen.

Vielmehr wird der Ventilkörper 32 auch im Falle eines Ablösens von Teilstücken von dem Halteansatz 50 in dem Innenraum 120 zwischen dem Ventilsitz 28" und dem Einsatzteil 66" gehalten werden.

Damit ist bei dieser Ausführungsform des Drainagesystems 14" eine zusätzliche Sicherung für den Ventilkörper 32" gegen ein Lösen und Mittransportiertwerden mit dem Öl vorgesehen.

Auch bei diesem Ausführungsbeispiel lassen sich die Oberflächen des Ringkörpers 106, insbesondere die Ringinnenseiten 108 mit der für die verschleißfreie Aufnahme von Elastomer erforderlichen Oberflächenform und hohen Oberflächenqualität herstellen, da das Einsatzteil 60" separat von dem Boden 22 und der Einsatzteilaufnahme 80" hergestellt werden kann, während die Oberflächen zur Aufnahme des Einsatzteils 60" auch mit minderwertigerer Oberflächenqualität hergestellt werden können.

Im Übrigen sind diejenigen Elemente des zweiten Ausführungsbeispiels, die mit denen des ersten Ausführungsbeispiels identisch sind, mit denselben Bezugszeichen versehen, sodass hinsichtlich der Beschreibung derselben vollinhaltlich auf die Ausführungen des ersten Ausführungsbeispiels Bezug genommen werden kann.

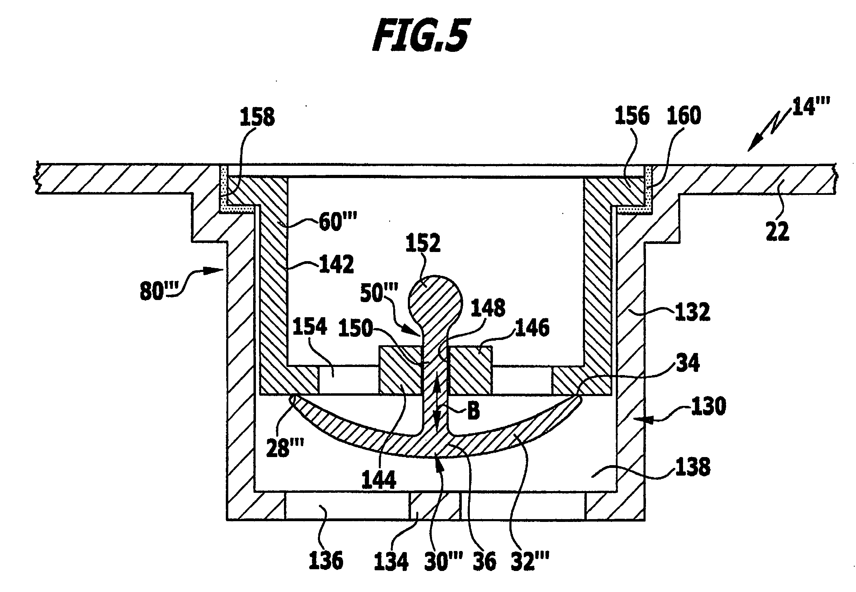

Bei einem vierten Ausführungsbeispiel, dargestellt in Figur 5, ist der Boden 22 mit einer topfähnlichen Vertiefung 130 versehen, die einstückig an den Boden 22 angeformte Seitenwände 132 und einen Boden 134 aufweist, wobei der Boden 134 mit Durchlässen 136 für Öl versehen ist, welches sich in der topfähnlichen Vertiefung 130 sammelt.

In einen Innenraum 138 der Vertiefung 130 ist das Ventilelement 30'" eingesetzt, welches von einem ebenfalls in den Innenraum 138 eingesetzten Einsatzteil 60"'gehalten ist.

Das Einsatzteil 60'" ist bei diesem Ausführungsbeispiel auch topfähnlich ausgebildet und umfasst ebenfalls Seitenwände 142, sowie einen Boden 144, der seinerseits einen Ringkörper 146 bildet, welcher mit einer Ringinnenseite 148 an dem Halteansatz 50'" des Ventilelements 30'" anliegt, wobei sich der Halteansatz 50'" zumindest teilweise durch den Ringkörper 146 mit einem Hals 150 hindurcherstreckt, und der Hals 150 auf seiner dem Ventilkörper 32"' gegenüberliegenden Seite eine Verdickung 152 trägt, die den Halteansatz 50'" gegen eine Bewegung durch den Ringkörper 146 hindurch in der Bewegungsrichtung B sichert und insbesondere gegen eine Bewegung des Halteansatzes 50'" in Richtung der Seite des Bodens 144, auf welcher der Ventilkörper 32 angeordnet ist.

Außerdem weist die Ringinnenseite 148 in der Bewegungsrichtung B eine ausreichend große Führungslänge auf, um den Hals 150 und somit auch den Ventilkörper 32" bei seinen Bewegungen in der Bewegungsrichtung B verkantungsfrei zu führen und somit eine zuverlässige Ventilfunktion sicherstellen.

Somit liegt auch bei diesem Ausführungsbeispiel der Ventilkörper 32 zwischen dem Boden 144 des Einsatzteils 60'" und dem Boden 134 der Vertiefung 130 und ist damit selbst bei einem Lösen vom Halteansatz 50'" gesichert.

Um Öl durch den Boden 144 hindurchtreten zu lassen, ist dieser mit Durchlässen 154 versehen, welche um den Ringkörper 146 herum angeordnet sind und innerhalb des Ventilsitzes 28'" liegen, der auf einer dem Boden 134 zugewandten Seite des Bodens 144 ausgebildet ist und um die Durchlässe 154 herum verläuft, so dass der Ventilkörper 32'" in der Lage ist, in der Schließstellung bei an dem Ventilsitz 28'" anliegendem Schirmrand 34 einen Ölfluss durch die Durchlässe 154 hindurch zu unterbinden, sich jedoch ausgehend von dieser in die Öffnungsstellung zu bewegen, in der der Ventilkörper 32'" an den Boden 134 anliegt und den Ölfluss freigibt.

Die Fixierung des Einsatzteils 60'" in der als Vertiefung 130 ausgebildeten Einsatzteilaufnahme 80" erfolgt beispielsweise durch Verkleben von Flanschabschnitten 156 in die Flanschabschnitte 156 aufnehmenden und an den Boden 22 angeformten Flanschaufnahmen 158 mittels einer Klebstoffschicht 160. Damit liegt das Einsatzteil 60'" gegenüber dem Boden 22 abgedichtet in der Einsatzteilaufnahme 80'" und das sich über dem Boden 22 sammelnde Öl tritt in das Einsatzteil 60'" ein und durch die Durchlässe 154 in dem Boden 144 desselben dann hindurch, wenn der Ventilkörper 32'" öffnet, so dass dann das Öl an dem Ventilkörper 32'" vorbeiströmen kann und durch die Öffnungen 136 im Boden 134 aus der Einsatzteilaufnahme 80'" wieder austreten kann.

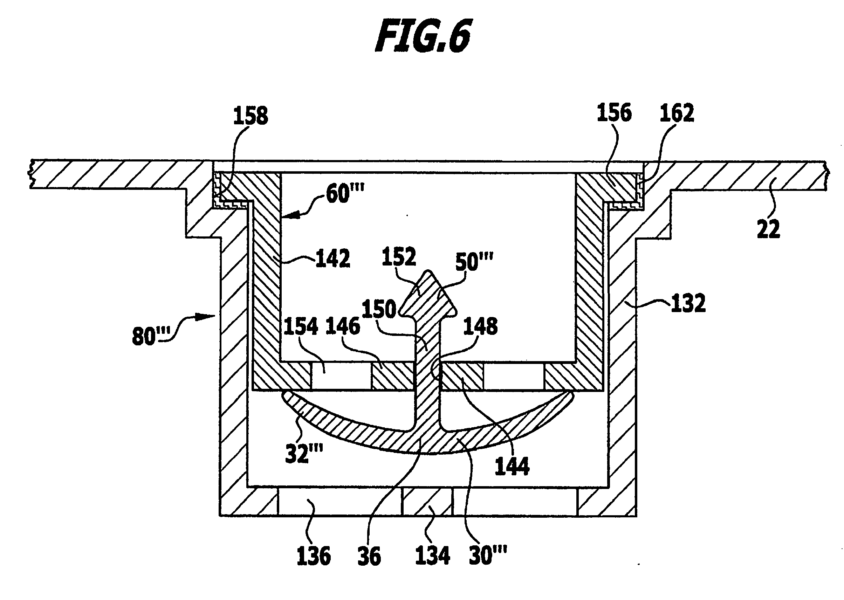

Ein fünftes Ausführungsbeispiel, dargestellt in Figur 6, ist in gleicher Weise ausgebildet wie das vierte Ausführungsbeispiel, mit dem einzigen Unterschied, dass die Fixierung des Einsatzteil 60'" in der Einsatzteilaufnahme 80'" nicht durch Verkleben der Flanschabschnitte 156 mit den Flanschaufnahmen 158 erfolgt, sondern durch Verschweißen derselben erfolgt, so dass sich eine Schweißnaht 162 ausbildet, die einen dichten Abschluss zwischen dem Flanschabschnitt 156 und der Flanschaufnahme 158 darstellt.

Im Übrigen sind diejenigen Teile, die mit den entsprechenden Teilen des vierten Ausführungsbeispiels identisch sind, mit denselben Bezugszeichen versehen, so dass hinsichtlich der Beschreibung derselben vollinhaltlich von den Ausführungen zum dritten Ausführungsbeispiel Bezug genommen werden kann.

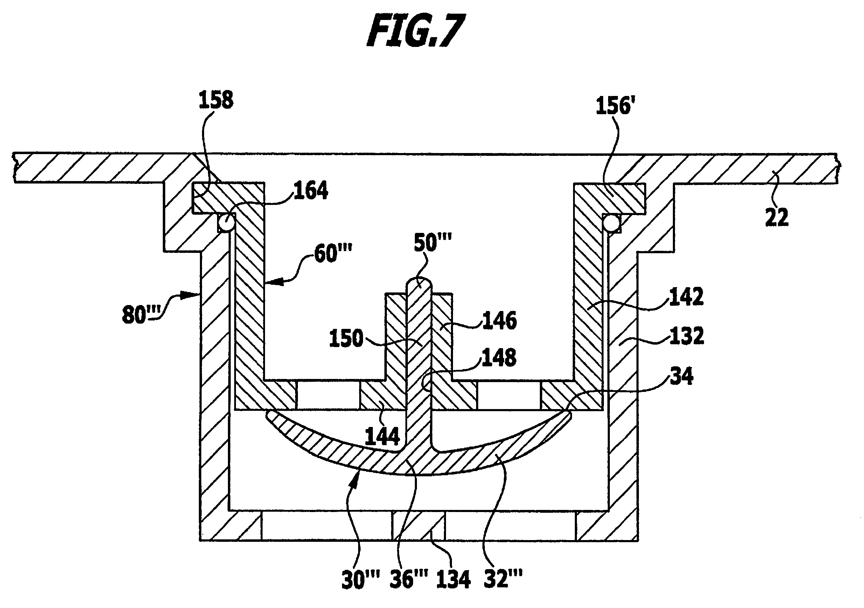

Bei einem sechsten Ausführungsbeispiel, dargestellt in Figur 7 erfolgt die Ausbildung des Einsatzteils 60'" und der Einsatzteilaufnahme 80'" in ähnlicher Weise wie beim vierten und fünften Ausführungsbeispiel.

Ein Unterschied zum vierten und fünften Ausführungsbeispiel besteht darin, dass die Flanschabschnitte 156' mit in umlaufende ringförmige als Flanschaufnahme 158' gebildete Vertiefungen der Einsatzteilaufnahme 80"' eingreifen und somit in der Einsatzteilaufnahme 80"' formschlüssig verrastbar sind.

Um zuverlässig einen dichten Abschluss im Einsatzteil 60'" und der Einsatzteilaufnahme 80'" herstellen zu können, ist im Bereich der Flanschaufnahme 158' noch ein Dichtring 164 vorgesehen, der bei in die Flanschaufnahme 158' eingerasteten Flanschabschnitten 156' zwischen den Seitenwänden 132 der Einsatzteilaufnahme 80'" und den Seitenwänden 142 des Einsatzteils 60"' einen dichten Abschluss bewirkt.

Außerdem ist bei dem sechsten Ausführungsbeispiel der Halteansatz 50'" nur mit dem Hals 150 versehen, der durch die Ringinnenseite 148 des Ringkörpers 146 verkantungsfrei geführt ist, wobei die als Verliersicherung dienende Verdickung 152 fehlt.

Die Verliersicherung für das Ventilelement 30"' erfolgt durch den Boden 134 der Einsatzteilaufnahme 80"'.

Im Übrigen sind diejenigen Teile des sechsten Ausführungsbeispiels, die mit denen des vierten und fünften Ausführungsbeispiels identisch sind, mit denselben Bezugszeichen versehen, so dass hinsichtlich der Beschreibung derselben auf die Ausführungen zum dritten und vierten Ausführungsbeispiel sowie auch den übrigen voranstehenden Ausführungsbeispielen vollinhaltlich Bezug genommen werden kann.

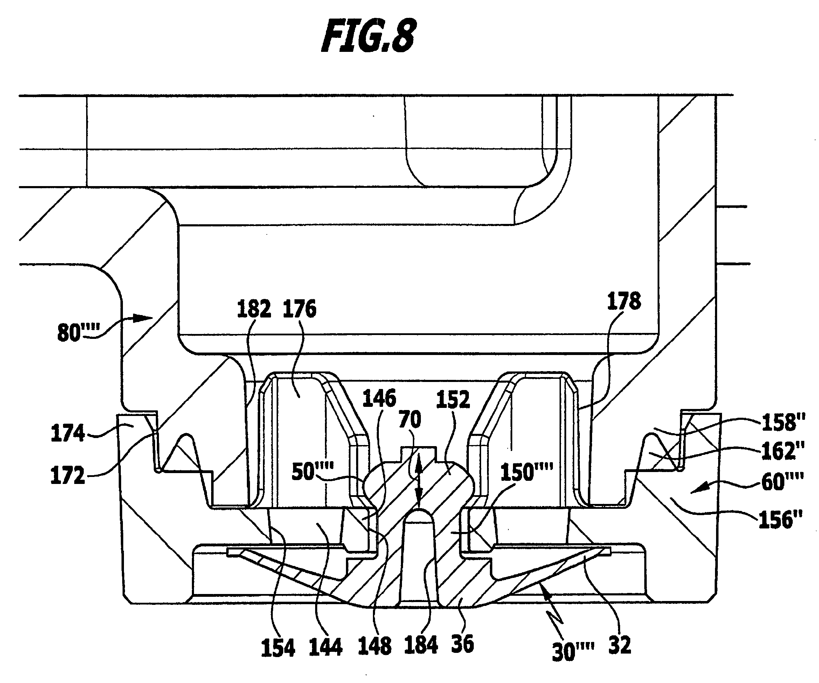

Bei einem siebten Ausführungsbeispiel, dargestellt in Fig. 8, ist das Einsatzteil 60"" mit einem äußeren Flanschabschnitt 156" versehen, welcher durch Reibschweißen mit einer Flanschaufnahme 158" der Einsatzteilaufnahme 80"" verbunden ist, wobei beim Reibschweißen sich ein Reibschweißbereich 162" ausbildet, welcher eine flüssigkeitsdichte, insbesondere öldichte, Verbindung zwischen dem Flanschabschnitt 156" und der Flanschaufnahme 158" bewirkt.

Dabei ist beispielsweise die Flanschaufnahme 158" mit einer umlaufenden Nut 172 versehen, in welche ein ringförmiger Vorsprung 174 des Flanschabschnitts 156" eingreift.

Um eine vorteilhafte Zentrierung des Einsatzteils 60"" beim Aufsetzen des Flanschabschnitts 156" auf die Flanschaufnahme 158" zu erreichen, ist vorzugsweise das Einsatzteil 60"" mit Rippen 176 versehen, die sich ausgehend von dem Boden 144 des Einsatzteils 60"" erheben und in die Flanschaufnahme 158" eingreifen, wobei die Rippen 176 beispielsweise Außenkanten 178 aufweisen, die sich zur Zentrierung des Einsatzteils 60"" an einer Innenkontur 182 der Flanschaufnahme 158" abstützen können.

Die Rippen 176 sind dabei vorzugsweise zwischen den Durchlässen 154 auf dem Boden 144 angeordnet und erstrecken sich bis zu dem Ringkörper 146, der die Ringinnenseite 148 zur Aufnahme des Halses 150"" des Ventilelements 30"" bildet.

Vorzugsweise trägt der Hals 150"" in gleicher Weise wie bei dem zweiten bis sechsten Ausführungsbeispiel die Verdickung 152 zur Abstützung desselben am Ringkörper 146.

Zusätzlich ist der Hals 150"" mit einer sich von einer dem Boden 144 abgewandten Seite innerhalb des Zentralbereichs 36 des Ventilkörpers 32 in den Hals 150"" hineinerstreckenden Eintiefung 184 versehen, welche zur Aufnahme eines Montagedorns für die Montage des Ventilelements 30"" dient.

Im Übrigen ist das Ventilelement 30"" in Richtung 70 bewegbar, in gleicher weise, wie dies im Zusammenhang mit den voranstehenden Ausführungsbeispielen erläutert wurde.

Im Übrigen sind diejenigen Teile des siebten Ausführungsbeispiels, die mit den Teilen der voranstehenden Ausführungsbeispiele identisch sind, mit denselben Bezugszeichen versehen, so dass hinsichtlich der Form und des Zusammenwirkens dieser Teile miteinander sowie der Gesamtfunktion der Rückschlagventileinheit 18 vollinhaltlich zu den voranstehenden Ausführungsbeispielen Bezug genommen werden kann.

Auch beim vierten, fünften, sechsten und siebten Ausführungsbeispiel besteht somit die Möglichkeit, das Einsatzteil 60"', 60"" als separates Teil mit geeigneter Oberflächenform und hoher Oberflächenqualität insbesondere im Bereich des den Halteansatz 50"', 50"" haltenden Ringkörpers 146 und der Ringinnenseite 148 herzustellen, so dass Beschädigungen des Halteansatzes 50"', 50"" des Ventilelements 30"', 30"" vermieden werden und somit eine zuverlässige Dauerfunktionsfähigkeit des Ventilelements 30"', 30"" gegeben ist.

## Patentansprüche

1. Ölabscheidereinheit (10) insbesondere eine für Fahrzeugantriebe vorgesehene Ölabscheidereinheit (10), umfassend ein Ölabscheidergehäuse (12) mit einem Drainagesystem (14) und mit einer Rückschlagventileinheit (18), welche aus einem Ventilsitz (28) und einem Ventilelement (30) gebildet ist, das einen schirmähnlich ausgebildeten Ventilkörper (32) aus einem Elastomer umfasst, wobei der Ventilkörper des Ventilelements (30) an einem Einsatzteil (60) gehalten ist, **dadurch gekennzeichnet, dass** das Einsatzteil (60) seinerseits in eine Einsatzteilaufnahme (80) in einem Ventilgehäuse (20) einsetzbar ist, dass der Ventilkörper (32) beweglich mit dem Einsatzteil (60) verbunden ist und dass der Ventilkörper (32) insgesamt relativ zum Ventilsitz (28) zwischen einer Schließstellung und einer Öffnungsstellung bewegbar ist.

2. Ölabscheidereinheit nach Anspruch 1, **dadurch gekennzeichnet, dass** das Einsatzteil (60) als einstückiges Teil ausgebildet ist.

3. Ölabscheidereinheit nach einem der voranstehenden Ansprüche,
**dadurch gekennzeichnet, dass** das Einsatzteil (60) mindestens einen Durchlass (114, 154) für Öl aufweist.

4. Ölabscheidereinheit nach einem der voranstehenden Ansprüche,
**dadurch gekennzeichnet, dass** der Ventilkörper (32) direkt an dem Einsatzteil (60) gehalten ist.

5. Ölabscheidereinheit nach einem der voranstehenden Ansprüche,
**dadurch gekennzeichnet, dass** der Ventilkörper mit einem Halteansatz (50) des Ventilelements (30) versehen ist.

6. Ölabscheidereinheit nach einem der voranstehenden Ansprüche, **dadurch gekennzeichnet, dass** der Ventilkörper (32) geführt zwischen der Schließstellung und der Öffnungsstellung bewegbar ist.

7. Ölabscheidereinheit nach einem der voranstehenden Ansprüche, **dadurch gekennzeichnet, dass** das Einsatzteil (60) das Ventilelement (30) mit gratfreien Flächen (74, 108, 148) aufnimmt.

8. Ölabscheidereinheit nach einem der voranstehenden Ansprüche, **dadurch gekennzeichnet, dass** das Einsatzteil (60) einen Ringkörper (106, 146) zur Aufnahme des Ventilelements (30) aufweist.

9. Ölabscheidereinheit nach einem der voranstehenden Ansprüche, **dadurch gekennzeichnet, dass** die Einsatzteilaufnahme (80) das Einsatzteil (60) zumindest teilweise aufnimmt.

10. Ölabscheidereinheit nach einem der voranstehenden Ansprüche, **dadurch gekennzeichnet, dass** Ventilelement (30) außerhalb der Einsatzteilaufnahme (80) angeordnet ist.

11. Ölabscheidereinheit nach einem der voranstehenden Ansprüche, **dadurch gekennzeichnet, dass** das Ventilelement (30) in einem zwischen dem Einsatzteil (60) und der Einsatzteilaufnahme (80) gebildeten Raum angeordnet ist.

12. Ölabscheidereinheit nach einem der voranstehenden Ansprüche, **dadurch gekennzeichnet, dass** der Ventilsitz (28) an dem Ventilgehäuse (20) ausgebildet ist.

13. Ölabscheidereinheit nach einem der Ansprüche 1 bis 11, **dadurch gekennzeichnet, dass** der Ventilsitz (28) an dem Einsatzteil (60) ausgebildet ist.

## Claims

1. Oil separator unit (10), in particular an oil separator unit (10) provided for vehicle drives, comprising an oil separator housing (12) with a drainage system (14) and a check valve unit (18) formed from a valve seat (28) and a valve element (30) comprising a valve member (32) of an umbrella-like design and consisting of an elastomer, wherein the valve member of the valve element (30) is held on an insert part (60) **characterized in that** the insert part (60) is, for its part, insertable into an insert part receptacle (80) in a valve housing (20), that the valve member (32) is connected to the insert part (60) so as to be movable and that the valve member (32) is movable as a whole relative to the valve seat (28) between a closed position and an open position.

2. Oil separator unit as defined in claim 1, **characterized in that** the insert part (60) is designed as a one-piece part.

3. Oil separator unit as defined in either one of the preceding claims, **characterized in that** the insert part (60) has at least one opening (114, 154) for oil.

4. Oil separator unit as defined in any one of the preceding claims, **characterized in that** the valve member (32) is held directly on the insert part (60).

5. Oil separator unit as defined in any one of the preceding claims, **characterized in that** the valve member is provided with a holding attachment (50) of the valve element (30).

6. Oil separator unit as defined in any one of the preceding claims, **characterized in that** the valve member (32) is guided for movement between the closed position and the open position.

7. Oil separator unit as defined in any one of the preceding claims, **characterized in that** the insert part (60) accommodates the valve element (30) with burr-free surfaces (74, 108, 148).

8. Oil separator unit as defined in any one of the preceding claims, **characterized in that** the insert part (60) has a ring member (106, 146) for accommodating the valve element (30).

9. Oil separator unit as defined in any one of the preceding claims, **characterized in that** the insert part receptacle (80) accommodates the insert part (60) at least partially.

10. Oil separator unit as defined in any one of the preceding claims, **characterized in that** the valve element (30) is arranged outside the insert part receptacle (80).

11. Oil separator unit as defined in any one of the preceding claims, **characterized in that** the valve element (30) is arranged in a space formed between the insert part (60) and the insert part receptacle (80).

12. Oil separator unit as defined in any one of the preceding claims, **characterized in that** the valve seat (28) is formed on the valve housing (20).

13. Oil separator unit as defined in any one of claims 1 to 11, **characterized in that** the valve seat (28) is formed on the insert part (60).

## Revendications

1. Unité de séparation d'huile (10), en particulier unité de séparation d'huile (10) prévue pour des transmissions de véhicules, comprenant un carter de séparation d'huile (12) avec un système de drainage (14) et avec une unité de soupape anti-retour (18) constituée d'un siège de soupape (28) et d'un élément de soupape (30) comprenant un corps de soupape (32) en élastomère ayant une forme de parapluie, le corps de soupape de l'élément de soupape (30) étant maintenu sur une pièce d'insertion (60), **caractérisée en ce que** la pièce d'insertion (60) est insérable dans un logement (80) de pièce d'insertion d'un boîtier de soupape (20), **en ce que** le corps de soupape (32) est raccordé de manière mobile à la pièce d'insertion (60) et **en ce que** le corps de soupape (32) est globalement déplaçable entre une position de fermeture et une position d'ouverture par rapport au siège de soupape (28).

2. Unité de séparation d'huile selon la revendication 1, **caractérisée en ce que** la pièce d'insertion (60) est une pièce formée d'un seul tenant.

3. Unité de séparation d'huile selon l'une des revendications précédentes, **caractérisée en ce que** la pièce d'insertion (60) présente au moins un passage (114, 154) pour l'huile.

4. Unité de séparation d'huile selon l'une des revendications précédentes, **caractérisée en ce que** le corps de soupape (32) est maintenu directement contre la pièce d'insertion (60).

5. Unité de séparation d'huile selon l'une des revendications précédentes, **caractérisée en ce que** le corps de soupape est pourvu d'un épaulement de maintien (50) de l'élément de soupape (30).

6. Unité de séparation d'huile selon l'une des revendications précédentes, **caractérisée en ce que** le corps de soupape (32) est déplaçable de manière guidée entre la position de fermeture et la position d'ouverture.

7. Unité de séparation d'huile selon l'une des revendications précédentes, **caractérisée en ce que** la pièce d'insertion (60) reçoit l'élément de soupape (30) avec des surfaces (74, 108, 148) exemptes de bavures.

8. Unité de séparation d'huile selon l'une des revendications précédentes, **caractérisée en ce que** la pièce d'insertion (60) présente un corps annulaire (106, 146) pour le logement de l'élément de soupape (30).

9. Unité de séparation d'huile selon l'une des revendications précédentes, **caractérisée en ce que** le logement (80) de pièce d'insertion reçoit la pièce d'insertion (60) au moins en partie.

10. Unité de séparation d'huile selon l'une des revendications précédentes, **caractérisée en ce que** l'élément de soupape (30) est disposé en dehors du logement (80) de pièce d'insertion.

11. Unité de séparation d'huile selon l'une des revendications précédentes, **caractérisée en ce que** l'élément de soupape (30) est disposé dans un espace formé entre la pièce d'insertion (60) et le logement (80) de pièce d'insertion.

12. Unité de séparation d'huile selon l'une des revendications précédentes, **caractérisée en ce que** le siège de soupape (28) est formé contre le boîtier de soupape (20).

13. Unité de séparation d'huile selon l'une des revendications 1 à 11, **caractérisée en ce que** le siège de soupape (28) est formé contre la pièce d'insertion (60).
